# EUROPEAN PATENT SPECIFICATION

(11) **EP 1 526 783 B1**
(45) Date of publication and mention of the grant of the patent: **08.02.2006**
(21) Application number: 03715190.9
(22) Date of filing: 22.04.2003
(51) Int. Cl.: A23L 2/04, A23N 1/00, B30B 9/24

(54) **A PROCESS AND DEVICE FOR EXTRACTING APPLE, PEAR, PEACH AND MORE GENERALLY FRUIT AND VEGETABLE JUICE**
VERFAHREN UND VORRICHTUNG ZUR EXTRAKTION VON APFEL, BIRNE, PFIRSICH UND MEHR ALLGEMEIN VON FRUCHT- UND GEMÜSESAFT
PROCEDE ET DISPOSITIF D'EXTRACTION DE JUS DE POMMES, DE POIRES, DE PECHES, ET PLUS GENERALEMENT DE FRUITS ET DE LEGUME

(30) Priority: 26.07.2002 IT PR20020040
(43) Date of publication of application: 04.05.2005
(73) Proprietor: SIG Technology Ltd., 8212 Neuhausen am Rheinfall (CH)
(72) Inventor: ARELLI, Pierluigi, I-43100 Parma (IT); PACIELLO, Pierluigi, I-43100 Parma (IT)
(74) Representative: Gotra, Stefano
(86) International application number: PCT/IB2003/001478
(87) International publication number: WO 2004/014157

(56) References cited:
- EP-A- 0 457 062
- EP-A- 0 562 223
- DE-A- 3 701 608
- DE-A- 4 216 968
- NL-A- 7 003 414
- US-A- 4 643 088
- US-A- 5 309 829
- PACIELLO G ET AL: "Cold extraction of fruit puree." FRUIT PROCESSING 12 (5) 218-223 2002 SIG MANZINI SPA, PARMA, ITALY, XP008021162

## Description

### TECHNICAL FIELD AND BACKGROUND ART.

The present invention relates to a process for extracting apple, pear, peach juice, also applicable for the extraction of fruit and vegetable juice in general.

The production of both clear juices and cloudy juices normally involves the following processing steps:
- product washing/sorting (typically apples, or more generally fruit or vegetables);
- chopping of the entire product;
- first pressing or first extraction of the chopped product, performed with a belt press or hydraulic press. This step gives a pulpless first extraction juice (the yield is around 70 - 80% in the absence of maceration enzymes) and first extraction waste with a given size and significantly retaining the structure of the chopped product with the presence of pips, peel and stalks. Hot water from an evaporation step is normally added to the waste and the waste is subjected to a first leaching process;
- second pressing or second extraction performed on the waste from the first extraction, giving a second extraction juice and depleted waste which is eliminated;
- mixing of the juices from the first and second extractions in a shared tank to give a juice which is then pasteurised and subjected to further treatments, depending on whether the juice to be obtained is clear or cloudy.

In particular, in the case of clear juice, the juice is subjected to enzyme treatment and treatment with fossil flour (bentonite) or activated charcoal to reduce polyphenols and subsequent ultrafiltration.

In contrast, in the case of cloudy juice, the juice is subjected to a third extraction and subsequent concentration.

Basically, the process begins with the whole apple (or more generally the whole fruit of vegetable) which has not undergone any preliminary physical treatment, and which is chopped.

The material chopped, containing pips, stalks and peel, is a collection of particles in the form of slices or pieces with a well defined outline which makes it suitable for known pressing machines with a belt or bag type filtering surface.

During the pressing steps, pips, stalks and peel help to form a filter bed.

The juice from the second extraction has different chemical - physical characteristics to the juice from the first extraction and is added to the latter to increase the overall sugar yield, although accepting a reduction in the quality of the final juice.

This known process has the following disadvantages:
- the chopping of whole fruits gives an unattractive colour to the final juice and the transfer of endemic pesticide residues; those which are heat-resistant remain even in the successive steps for obtaining the final juice;
- the total polyphenol content is very high (since they are mainly present in the pips and the peel), such that in order to obtain a clear juice, a suitable treatment with activated charcoal or fossil flour is required to lower the polyphenol content to within acceptable limits. Moreover, during storage, the polyphenols react with the proteins present in the juice, creating polymeric complexes which cause hazing and sediments, and also give an unpleasant sour flavour;
- in the case of fruit with a reddish colour (due to the presence of anthocyanins) the final juice has an unattractive red - brown colour.

From Paciello G. "Fruit Processing 2002" is known a system whose sole purpose is to produce puree and not juice with improvements of the pulp.

EP-A-0457062 discloses a method of making a mash of fruits wherein a pup is sieved under cold conditions to separate from the pulp a residue comprising the rind, seeds and/or stones. However the method is not for obtaining juice.

US-A-4643088 and DE-A-3701608 relate to a system of extraction strafing from mash and not from puree wherein it is not provided the elimination of peel pips and stalks prior to pressing.

### DISCLOSURE OF THE INVENTION.

The aim of the present invention is to overcome the above-mentioned disadvantages and provide a process for obtaining a clear and/or cloudy apple juice, and more generally a fruit or vegetable juice, of high quality with improved flavour and less hazing.

Another aim of the present invention is to avoid the use of activated charcoal or fossil flour or, in any event, to render the reduction of polyphenols unnecessary.

A further aim of the present invention is to increase the yield of the process.

The above-mentioned aims are fulfilled by the process disclosed, as described in the claims herein.

### BEST MODE FOR CARRYING OUT THE INVENTION.

This and other characteristics are more clearly illustrated in the description which follows, with reference to the accompanying drawings, which illustrate a preferred embodiment, without limiting the scope of its application, and in which:
- Figure 1 illustrates the process according to the
prior art;
- Figure 2 illustrates a possible innovative process;
- Figure 3 is a graph illustrating the ratio of total polyphenols to condensed polyphenols (an indicator of product astringency) in the prior and according to the present invention;
- Figure 4 is a graph illustrating the condensed polyphenols at 12° Brix in the prior art and according to the present invention;
- Figure 5 is a graph illustrating the total polyphenols at 12° Brix in the prior art and according to the present invention;
- Figure 6 is a graph illustrating the watersoluble colour at 12° Brix in the prior art and according to the present invention.

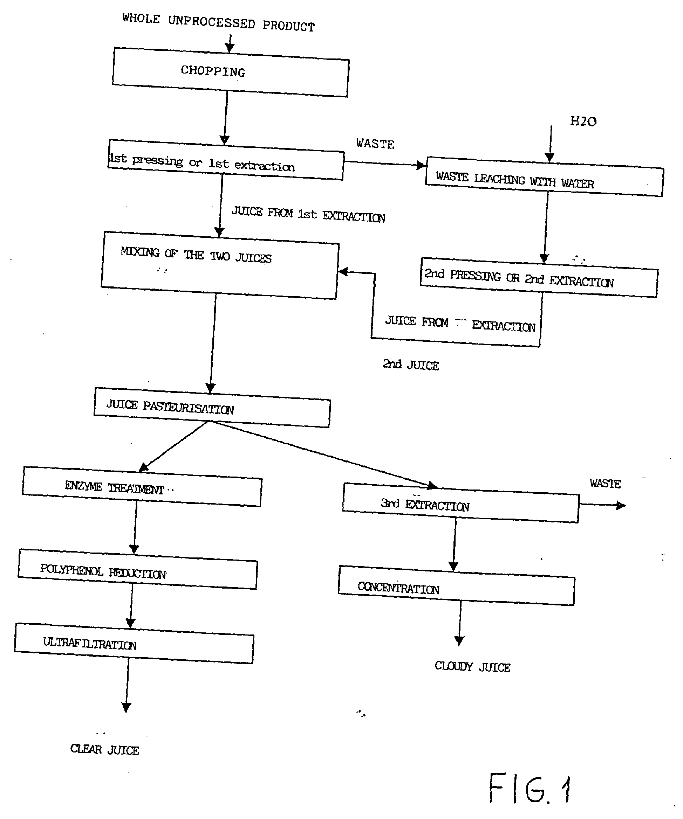

With reference to Figure 1, it illustrates the process already described and currently in use, in which the whole product is chopped then the chopped product containing pips, stalks and peel is treated.

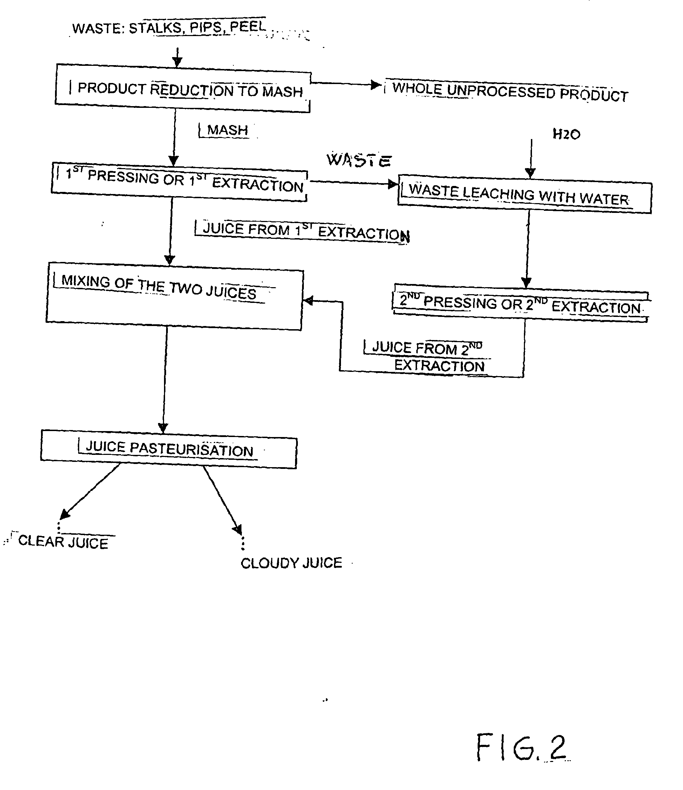

In contrast, Figure 2 illustrates an innovative process in which juice extraction takes place in an original fashion by treating a puree, which is preferably free of pips, stalks and peel and obtained by means of cold processing which, in the specific case of an apple, reduces the oxidative enzymatic action which darkens the finished product, reduces the total and condensed polyphenols and eliminates colour residues.

The term puree refers to a collection of particles which are preferably of the same size, in which the geometrical outlines are not recognisable to the naked eye.

Such a puree is obtained, for example, using a known type of regrinder with a 8 to 0.5 mm sieve and a speed of rotation between 300 and 2000 rpm.

The puree is preferably obtained by means of a process for removing the peel, pips and stalks at room temperature.

The first and second pressing or extraction steps are, in an original way, carried out cold, that is to say, at room temperature, with a belt press whose belt is, in an original way, designed to receive the puree product described above.

In particular, there is only one belt in which holes with different shapes are made: circles, rhombuses, rectangles, triangles or polygonal shapes.

In an alternative embodiment there may be a plurality of belts placed over one another with relative reciprocal sliding, shaped in such a way that they form a filter bed suitable for receiving the puree.

However, pressing may also be performed in a conventional belt press or hydraulic press, even if until now it was considered impossible or, in any case, useless, to subject a puree to pressing and, therefore, the present invention is even more surprising. The process disclosed comprises the following steps:
- first pressing or first extraction of the puree at room temperature; this step gives a first extraction juice and first extraction waste in the form of puree, which is then preferably subjected to leaching with hot water at a temperature of around 30 - 60 °C;
- second pressing or second extraction at room temperature, performed on the first extraction waste (that is to say, a refined puree to which a variable quantity of water has been added) to obtain a second extraction juice and depleted waste which is eliminated;
- mixing of the juices from the first and second extractions in a shared tank, to give a juice which is then pasteurised and subjected to further treatments, depending whether the juice to be obtained is clear or cloudy.

The present invention allows a juice with improved appearance and flavour to be obtained and avoids the use of activated charcoal, since the puree (without pips, stalks and peel) contains much fewer polyphenols.

There is also a 1 - 2% weight increase in the yield compared with the prior art.

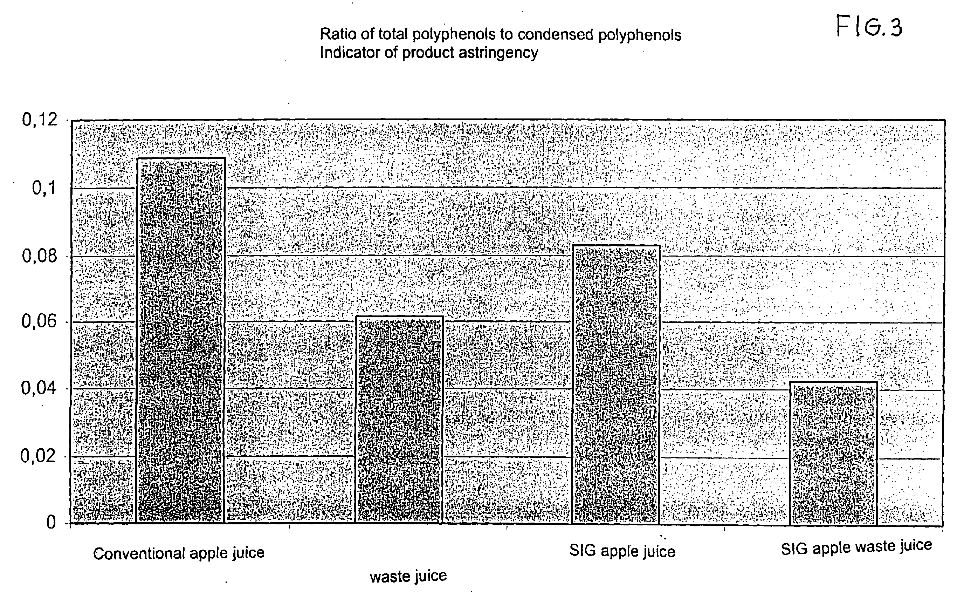

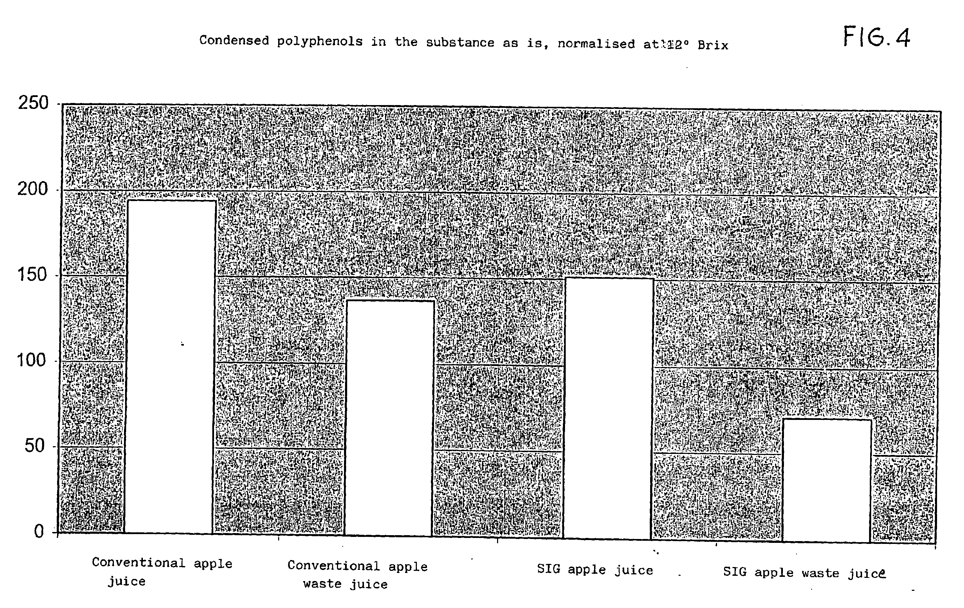

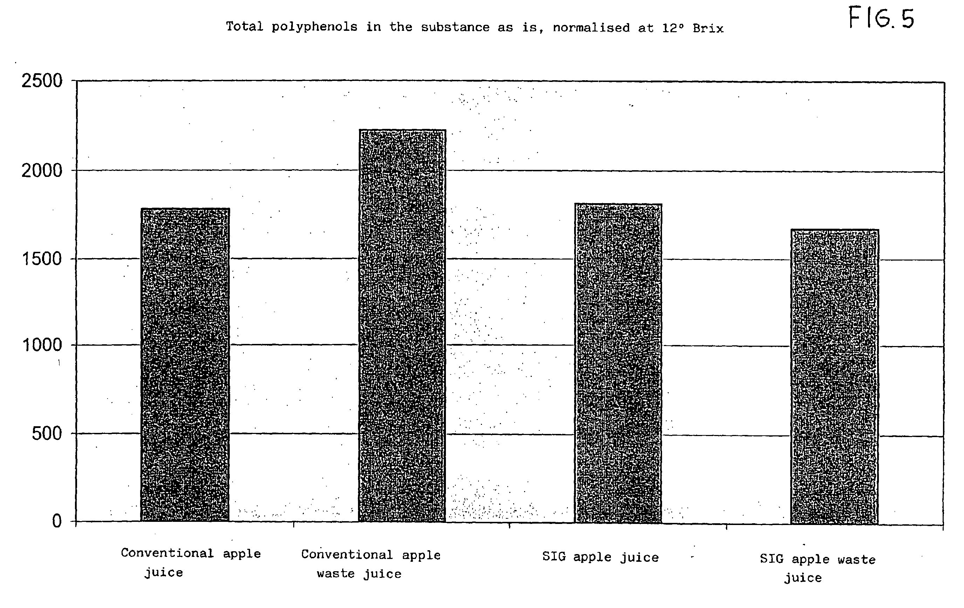

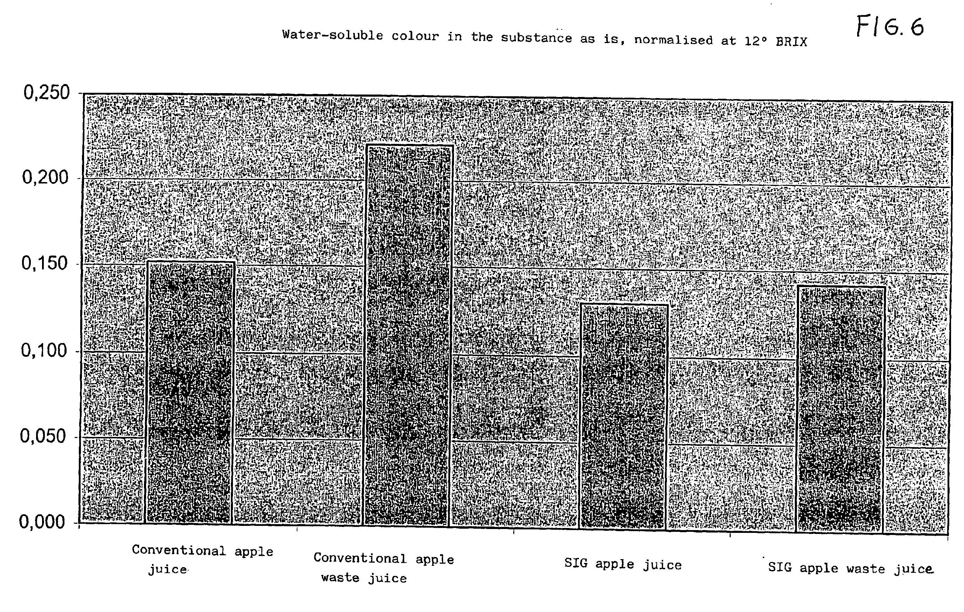

The graphs in Figures 3 to 6 unequivocally show how the process for obtaining apple juice disclosed, called SIG in the graphs, is noticeably better than the conventional process in all of the parameters considered.

## Claims

1. A process for obtaining clear and/or cloudy apple, pear, peach juice, comprising the steps of:
- starting with the apple, obtaining an intermediate product consisting of apple puree obtained cold, that is to say, at room temperature, removing the peel, pips and stalks ;
- pressing or first juice extraction at room temperature, obtaining a first extraction juice and first extraction waste, hot water sometimes being added to the waste;
- second pressing or second juice extraction (if required), carried out at room temperature on the first extraction waste, obtaining a second extraction juice and second extraction waste;
- mixing the first and second extraction juices to obtain a final juice for subsequent treatments, such as pasteurisation.

2. A process for obtaining fruit or vegetable juice comprising the steps of:
- starting with the fruit or vegetables, obtaining an intermediate product consisting of fruit or vegetable puree obtained cold, that is to say, at room temperature, removing the peel, pips and stalks ;
- pressing or first juice extraction at room temperature, obtaining a first extraction juice and first extraction waste, hot water sometimes being added to the waste;
- second pressing or second juice extraction (if required), carried out at room temperature on the first extraction waste, obtaining a second extraction juice and second extraction waste;
- mixing the first and second extraction juices to obtain a final juice for subsequent treatments, such as pasteurisation.

3. The process according to claim 1 or 2, in which both the first extraction juice and the first extraction waste are in the form of puree.

4. The process according to claim 1 or 2, in which both the second extraction juice and the second extraction waste are in the form of puree.

5. A process as in claims 1 or 2 wherein after the first juice extraction, the first extraction waste, in the form of puree, is subjected to leaching with hot water at 30°-60°C.

## Patentansprüche

1. Verfahren zum Herstellen von klarem bzw. trübem Apfel-, Birnen-, Pfirsichsaft, umfassend folgende Schritte:
- Herstellen aus den Äpfeln eines Zwischenproduktes bestehend aus kalt, d.h. bei Zimmertemperatur gewonnenem Apfelpüree, wobei die Schale, Kerne und Stiele entfernt werden;
- Pressung oder Primärsaftextraktion bei Raumtemperatur; wobei Saft aus der Primärextraktion und Abfallprodukte aus der Primärextraktion entstehen, welchen Abfallprodukten gegebenenfalls warmes Wasser zugegeben wird;
- zweite Pressung oder Sekundärsaftextraktion (sofern erforderlich), die bei Raumtemperatur mit den Abfallprodukten der Primärextraktion durchgeführt wird und zu Saft aus der Sekundärextraktion und Abfallprodukten aus der Sekundärextraktion führt;
- Mischen der Säfte aus der Primär- und der Sekundärextraktiön zur Herstellung eines Saftendproduktes, das weiteren Behandlungen, wie Pasteurisierung zugeführt wird.

2. Verfahren zum Herstellen von Frucht- oder Gemüsesäften, umfassend die Schritte:
- Herstellen aus den Früchten oder dem Gemüse eines Zwischenproduktes bestehend aus kalt, d.h. bei Zimmertemperatur gewonnenem Frucht- oder Gemüsepüree, wobei die Schale, Kerne und Stiele entfernt werden;
- Pressung oder Primärsaftextraktion bei Raumtemperatur, wobei Saft aus der Primärextraktion und Abfallprodukte aus der Primärextraktion entstehen, welchen Abfallprodukten gegebenenfalls warmes Wasser zugegeben wird;
- zweite Pressung oder Sekundärsaftextraktion (sofern erforderlich), die bei Raumtemperatur mit den Abfallprodukten der Primärextraktion durchgeführt wird und zu Saft aus der Sekundärextraktion und Abfallprodukten aus der Sekundärextraktion führt;
- Mischen der Säfte aus der Primär- und der Sekundärextraktion zur Herstellung eines Saftendproduktes, das weiteren Behandlungen, wie Pasteurisierung zugeführt wird.

3. Verfahren nach Anspruch 1 oder 2, bei dem sowohl der Saft aus der Primärextraktion als auch die Abfallprodukte aus der Primärextraktion in Form von Püree vorliegen.

4. Verfahren nach Anspruch 1 oder 2, bei dem sowohl der Saft aus der Sekundärextraktion als auch die Abfallprodukte aus der Sekundärextraktion in Form von Püree vorliegen.

5. Verfahren nach Anspruch 1 oder 2, bei dem nach der Primärsaftextraktion die püreeförmigen Abfallprodukte der Primärsaftextraktion mit 30-60 °C heissem Wasser gefiltert werden.

## Revendications

1. Procédé pour l'obtention de jus limpide et/ou trouble de pomme, poire, pêche, comprenant les phases de:
- en partant des pommes, l'obtention d'un produit intermédiaire consistant en une purée de pommes obtenue à froid, c'est à dire à température ambiente, en éliminant les peaux, pépins et queues;
- pressage ou première extraction de jus à température ambiente, en obtenant un premier jus d'extraction et de premiers déchets d'extraction, de l'eau chaude étant certaines fois ajoutée aux déchets;
- second pressage ou seconde extraction de jus (si nécessaire), sur les premiers déchets d'extraction à température ambiente, en obtenant un second jus d'extraction et de seconds déchets d'extraction;
- mélange des premiers et seconds jus d'extraction pour obtenir un jus final pour des traitements successifs, comme la pasteurisation.

2. Procédé pour l'obtention de jus de fruits ou de légumes, comprenant les phases de:
- en partant des fruits ou des légumes, obtention d'un produit intermédiaire consistant en une purée de fruits ou légumes obtenue à froid, c'est à dire à température ambiente, en éliminant les peaux, pépins et queues;
- pressage ou première extraction de jus à température ambiente, en obtenant un premier jus d'extraction et de premiers déchets d'extraction, de l'eau chaude étant certaines fois ajoutée aux déchets;
- second pressage ou seconde extraction de jus (si nécessaire), sur les premiers déchets d'extraction à température ambiente, en obtenant un second jus d'extraction et de seconds déchets d'extraction;
- mélange des premiers et seconds jus d'extraction pour obtenir un jus final pour des traitements successifs, comme la pasteurisation.

3. Procédé selon la revendication 1 ou 2, dans lequel aussi bien le premier jus d'extraction que les premiers déchets d'extraction se présentent sous la forme de purée.

4. Procédé selon la revendication 1 ou 2, dans lequel aussi bien le second jus d'extraction que les seconds déchets d'extraction se présentent sous la forme de purée.

5. Procédé selon les revendications 1 ou 2, dans lequel, après la première extraction de jus, les premiers déchets d'extraction, sous la forme d'une purée, sont soumis à une filtration avec de l'eau chaude à 30-60°C.
